# EUROPÄISCHE PATENTSCHRIFT

(11) **EP 1 627 505 B1**
(45) Veröffentlichungstag und Bekanntmachung des Hinweises auf die Patenterteilung: **24.01.2007**
(21) Anmeldenummer: 04766026.1
(22) Anmeldetag: 28.05.2004
(51) Int. Cl.: H04L 12/56

(54) **NETZKNOTEN EINES PAKETVERMITTELNDEN KOMMUNIKATIONSNETZES UND VERFAHREN ZUR VERKEHRSVERTEILUNG VON DATENVERKEHR IN EINEM PAKETVERMITTELNDEN KOMMUNIKATIONSNETZ**
NETWORK NODE OF A PACKET SWITCHING COMMUNICATIONS NETWORK AND METHOD FOR THE DISTRIBUTION OF DATA TRAFFIC IN A PACKET SWITCHING COMMUNICATIONS NETWORK
NOEUD RESEAU D'UN RESEAU DE COMMUNICATION A COMMUTATION DE PAQUETS ET PROCEDE DE DISTRIBUTION DU TRAFIC DE DONNEES DANS UN RESEAU DE COMMUNICATION A COMMUTATION DE PAQUETS

(30) Priorität: 28.05.2003 DE 10324370
(43) Veröffentlichungstag der Anmeldung: 22.02.2006
(73) Patentinhaber: SIEMENS AKTIENGESELLSCHAFT, 80333 München (DE)
(72) Erfinder: CHARZINSKI, Joachim, 81825 München (DE); KIRSTÄDTER, Andreas, 85560 Ebersberg (DE)
(86) Internationale Anmeldenummer: PCT/EP2004/050953
(87) Internationale Veröffentlichungsnummer: WO 2004/107676

(56) Entgegenhaltungen:
- US-A1- 2002 018 447
- US-B1- 6 553 005
- HOPPS C: "RFC 2992 - Analysis of an Equal-Cost Multi-Path Algorithm" NETWORK WORKING GROUP, November 2000 (2000-11), XP002267341

## Beschreibung

Paketvermittelnde Kommunikationsnetze, wie beispielsweise ein Internet-Protokoll-Netz, kurz IP-Netz, übertragen elektronische Daten in Paketen von einem Quell-Netzknoten zu einem Ziel-Netzknoten über verschiedene zwischenliegende Netzknoten des Kommunikationsnetzes, wobei jeder Netzknoten des Kommunikationsnetzes die Funktion als Quell- oder Zielnetzknoten für Datenpakete übernehmen kann. Die Netzknoten sind durch Verbindungen respektive Verbindungswege bzw. Links miteinander verbunden. Die Verbindungswege enden an einzelnen Interfaces des Netzknotens. Jedem dieser Netzknoten, wie Router, Switches, Gateways, Bridges, Netzelementen, etc., ist dabei mindestens eine Netzknotenadresse, z.B. eine IP-Adresse, zugewiesen, wobei die Netzknotenadresse auch dem Netzknoten-Interface zugeordnet sein kann. Die Netzknotenadressen werden über Routing-Protokolle, wie OSPF, RIP, BGP, IS-IS, usw., an die Netzknoten des Kommunikationsnetzes verteilt, so dass jeder Netzknoten Informationen über das Kommunikationsnetz hat und jeweils Routen zu allen Netzknoten des Kommunikationsnetzes berechnen und speichern kann. Die Routen bzw. Routing-Wege zu einem Ziel-Netzknoten werden dabei in einer sogenannte Routing-Tabelle des Netzknotens abgespeichert. Diese enthält die Netzknotenadresse des Zielnetzknotens, die Netzknotenadresse des zu diesem Ziel führenden Nachbarnetzknotens und das Interface bzw. die Interface-Identifikationsnummer, kurz Interface-ID, des eigenen Netzknotens, an dem eine Verbindung zu diesem Nachbarnetzknoten angeschlossen ist. Eingehende Datenpakete mit einer Ziel-Netzknotenadresse können an Hand der Routing-Tabelle zum Ziel-Netzknoten weitergeleitet werden. Dabei wird die Ziel-Netzknotenadresse mit den Einträgen in der Routing-Tabelle verglichen und bei Übereinstimmung der Nachbarnetzknoten und das Interface ermittelt, von dem aus das Paket über den Nachbarnetzknoten zum Ziel-Netzknoten übertragen wird.

Existieren mehrere parallele Wege zu einem Ziel-Netzknoten, so wird beim üblichen Single Path Routing nur ein Weg verwendet. Die Auswahl des Weges ergibt sich dabei in Abhängigkeit von der jeweiligen Implementierung.

Eine Alternative hierzu ist der Einsatz von Multiprotocol Label Switching, kurz MPLS. Hierbei werden netzweit Zustände gehalten, welche die Wege bzw. Pfade definieren, auf denen Pakete unter Umgehung des normalen Routings, wie IP-Routing, durch das Netz geleitet werden. Die Netzknoten leiten dabei Pakete nicht mehr anhand der Ziel-Adressen weiter, sondern es wird jedem Paket am Netzeingang eine Bitfolge, ein sogenanntes Label, vorangestellt. Dieses Label, das in jedem Netzknoten ausgewertet wird, bestimmt, auf welchem Weg die Pakete weitergeleitet werden sollen. Der Zusammenhang zwischen Labels und Pfaden muss bei der Inbetriebnahme des Netzes hergestellt werden. Das Label wird am Netzausgang wieder entfernt. Außerdem werden örtlich bzw. lokal Mechanismen bzw. Regeln benötigt, um Pakete auf einen Ersatzpfad umzulenken, wenn der ursprünglich vorgesehene Pfad ausfällt, oder um einen Ersatzpfad nach einem Ausfall aufzubauen.

Eine weitere Variante bei zwei oder mehreren gleichen Wegen ist das sogenannte Equal Cost Multi Path Verfahren, kurz ECMP, beim OSPF Protokoll. Hierbei wird bei gleichen Wegen der Datenpaketverkehr gleichmäßig aufgeteilt. D.h. bei zwei Wegen erhält jeder Weg 50% des Datenpaketverkehrs, bei drei Wegen jeder Weg 33% usw. Konkret bedeutet dies, dass bei zwei gleichen Wegen jedes zweite Datenpaket über den zweiten Weg übermittelt wird bzw. ein erster Datenpaket-Flow, d.h. eine Folge von Datenpaketen, über den ersten Weg und ein zweiter Datenpaket-Flow über den zweiten Weg gesendet wird, usw., so dass sich im Mittel eine gleichmäßige Verkehrsverteilung des Datenpaketverkehrs auf die Wege ergibt.

Aufgabe der vorliegenden Erfindung ist es, einen Netzknoten in der Weise auszubilden, dass eine flexible Aufteilung des Datenverkehrs zu einem Ziel-Netzknoten realisiert werden kann.

Diese Aufgabe wird durch einen Netzknoten gemäß den Merkmalen des Anspruchs 1 und durch ein Verfahren gemäß den Merkmalen des Anspruchs 10 gelöst.

Die Zuordnung weiterer Netzknotenadressen zu einem Verbindungsweg eines Netzkotens wird vom Netzknoten als weiterer Verbindungsweg erkannt. Bestehen dadurch mehrere Wege von einem Netzknoten zu einem anderen Netzknoten, so kann durch Konfigurierung der Anzahl bzw. Auswahl aus der Anzahl der konfigurierten weiteren Verbindungswege, über die Datenpakete weitergeleitet werden sollen, eine ungleiche Verteilung des Datenpaketverkehrs erreicht werden.

Vorteilhafte Ausgestaltungen der Erfindung sind in den Unteransprüchen angegeben.

In einer vorteilhaften Ausgestaltung wird der erfindungsgemäße Netzknoten unter Anwendung eines Mehrwege-Weiterleitungsverfahrens betrieben. Dies hat den Vorteil, dass ein standardisiertes Verfahren, wie beispielsweise ECMP, durch das erfindungsgemäße Verfahren flexibilisiert wird. Es ist eine freiere Verkehrsverteilung möglich, weshalb das Netz gleichmäßiger ausgelastet werden kann und dadurch mehr Leistungsreserven zur Verfügung stehen.

Eine Ausgestaltung der Erfindung ist in der Zeichnung dargestellt und wird im folgenden erklärt. Dabei zeigen:
Figur 1 zwei Netzknoten, die durch zwei Verbindungswege verbunden sind,
Figur 2 ein Netz, bestehend aus mehreren Netzknoten.

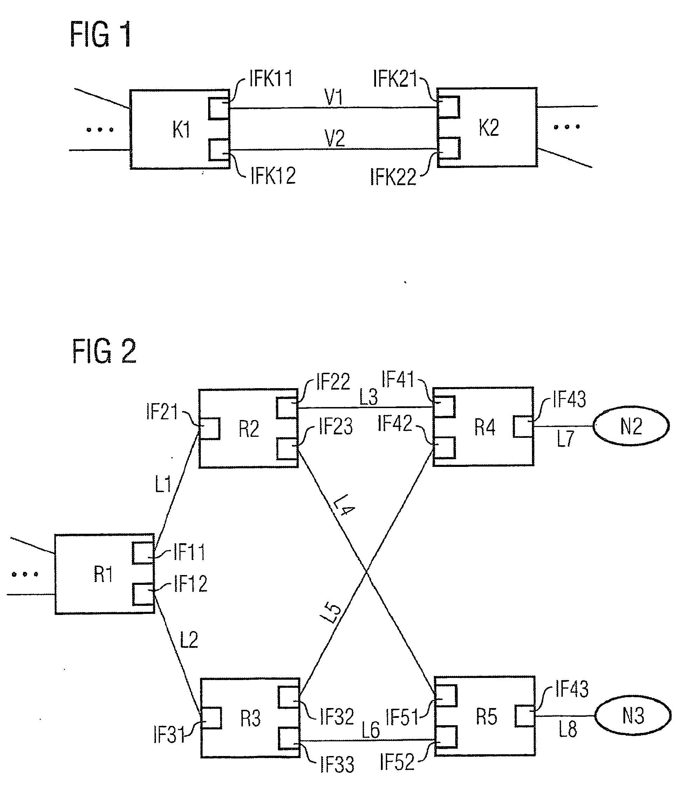

Figur 1 zeigt einen Teilbereich eines paketvermittelnden Kommunikationsnetzes, bei dem zwei Netzknoten K1 und K2 über zwei Verbindungen, Verbindungswege bzw. Links V1 und V2 miteinander verbunden sind. Die Verbindungen können bspw. Zweidrahtleitungen, Koaxialkabel oder Lichtwellenleiter sein. Die Verbindung V1 ist am Netzknoten K1 mit einem diesem zugeordneten Interface IFK11 und am Netzknoten K2 mit einem diesem zugeordneten Interface IFK21 verbunden. In analoger Weise ist die zweite Verbindung V2 am Netzknoten K1 mit einem diesem zugeordneten Interface IFK12 und am Netzknoten K2 mit einem diesem zugeordneten Interface IFK22 verbunden.

Gemäß dem Stand der Technik wird beim normalen Single Path Routing, wie OSPF, nur eine von den beiden Verbindungen V1 oder V2 verwendet. Die Auswahl der Verbindung ist implementierungsabhängig und außerdem ist nicht sichergestellt, dass die Netzknoten K1 und K2 in ihrer jeweiligen Übertragungsrichtung dieselbe Verbindung nutzen.

Sind den Verbindungen V1 und V2 dieselben Routing-Kosten bzw. Routing-Metriken zugeordnet und ist ECMP aktiviert, dann werden beide Verbindungen verwendet. Datenpakete werden dann je nach Konfiguration paketweise oder per Datenpaket-Flow auf die Verbindungen verteilt, so dass sich im Mittel ein Verhältnis von 1:1 für die Belastung der Verbindungen ergibt.

Beispielsweise besitzen die Interfaces die folgenden IP-Adressen, wobei die zugehörigen IP-Netze jeweils einen /24-Präfix haben sollen:

| | |
|---|---|
| IFK11 | 10.2.0.1 |
| IFK12 | 10.2.1.1 |
| IFK21 | 10.2.0.2 |
| IFK22 | 10.2.1.2 |

Die Routing-Tabelle im Netzknoten K1 zu einem über K2 erreichbares Ziel "108.13.2.0/24" sieht dann beispielsweise folgendermaßen aus, wobei destination = Ziel-Netzknotenadresse bzw. Ziel-Netzadresse, next hop = Nachbarnetzknoten und interface = Interface-ID bedeuten.

| destination | next hop | interface |
|---|---|---|
| 108.13.2.0/24 | 10.2.0.2 | IFK11 |
| | 10.2.1.2 | IFK12 |

Eine analoge Routing Tabelle befindet sich im Netzknoten K2, der Datenpakete bzw. Verkehr zum Netzknoten K1 über seine beiden Interfaces IFK21 und IFK22 an die Next-Hop-Adressen 10.2.0.1 und 10.2.1.1 weiterleitet.

Sollen Datenpakete ungleichmäßig auf die Verbindungen verteilt werden, werden erfindungsgemäß weitere, sogenannte "virtuelle" Interfaces konfiguriert. Dies erfolgt dadurch, dass weitere Netzwerkadressen bzw. IP Adressen auf den Interfaces konfiguriert werden.

Beispielsweise werden die folgenden Adressen zusätzlich konfiguriert (wiederum mit Präfix /24):

| | |
|---|---|
| IFK11 | 10.2.2.1 |
| IFK12 | 10.2.2.2 |

Diese beiden sogenannten virtuellen Adressen sind ebenso wie die primären Adressen von IFK11 und IFK21 aktiv und können Datenverkehr übernehmen.

Die Routing-Tabelle im Netzknoten K1 sieht dann wie folgt aus:

| destination | next hop | interface |
|---|---|---|
| 108.13.2.0/24 | 10.2.0.2 | IFK11 |
| | 10.2.1.2 | IFK12 |
| | 10.2.2.2 | IFK11 |

Der Datenpaketverkehr zum Ziel-Netzknoten "108.13.2.0/24" über den Netzknoten K2 wird im Netzknoten K1 nun auf drei Netzknotenadressen bzw. Netzwerkadressen aufgeteilt, wobei jede Netzknotenadresse bzw. Netzwerkadresse 1/3 des Gesamtverkehrs trägt. Da zwei der Netzknotenadressen dasselbe physikalische Interface und damit dieselbe physikalische Verbindung nutzen, tragen die Verbindungen V1 und V2 den Verkehr im Verhältnis 2:1.

Mit diesem Prinzip lassen sich für den Datenverkehr auf mehreren physikalischen Verbindungswegen beliebige Verteilungen erzielen. Durch das Einrichten weiterer Netzknotenadressen zu den physikalischen Verbindungen oder physikalischen Interfaces bzw. durch das Einrichten weiterer virtueller Interfaces lassen sich beliebige Datenverkehrsverteilungsverhältnisse k/m ermöglichen (k und m ganzzahlig).

Um den Verkehr ungleichmäßig aufzuteilen, müssen nicht zwei oder mehr direkte parallele Verbindungen zwischen zwei Netzknoten vorhanden sein. Werden den zu anderen Netzknoten führenden Interfaces oder Verbindungswegen eines Netzknotens in analoger Weise mehrere Netzknotenadressen bzw. IP-Adressen zugeordnet und wird ein Mehrwegeweiterleitungsverfahren respektive Multipath-Routing Verfahren eingesetzt, kann der Verkehr im Netz dynamisch ungleichmäßig aufgeteilt werden.

IP-Adressen unterteilen sich in einen sogenannten Netzwerk-und einen sogenannten Host-Teil. Diese wurden früher durch die sogenannten Classes (Class A, B, C, D) bzw. durch die sogenannten Sub-Netzwerkmasken bestimmt. Sie werden inzwischen durch die Präfixe bestimmt. Bei der Vergabe der IP-Adressen an die Interfaces ist es dabei von Vorteil, den Interfaces jeweils neue IP-Netzwerkadressen bzw. Netzwerkadressen zuzuordnen, wie sie im Beispiel verwendet wurden. Dabei wird in beiden Netzknoten einer Verbindung jeweils paarweise die gleiche IP-Netzwerk-Nummer bzw. IP-Netzwerkadresse konfigu riert, wobei die paarweisen Netzwerknummern jeweils individuell vergeben sind. So dass jede eingerichtete Verbindung einem eigenen IP-Netzwerk entspricht, wie es in IP-Netzen üblich ist.

Das erfindungsgemäße Verfahren lässt sich auch auf das statische Routing anwenden. Zum Beispiel können in einem Netzknoten für verschiedene Ziele bzw. Ziel-Netzknoten oder Ziel-Subnetze unterschiedliche Verkehrsverteilungen eingerichtet werden. Ebenso kann das erfindungsgemäße Verfahren bei einer Kombination von dynamischem und statischem Routing verwendet werden. Für einzelne Ziele kann vom dynamischen Routing mit der eingerichteten Verkehrsverteilung abgesehen werden und ein statisches Routing mit einer völlig abweichenden Verkehrsverteilung eingerichtet werden. Weiterhin können beispielsweise statische Routen eingetragen werden, durch die der Verkehr über mehrere Netzknoten hinweg auf Wegen verteilt wird, die im Sinne von OSPF und ECMP nicht "equal cost" sind. Dabei muss natürlich bei der Konfiguration darauf geachtet werden, dass die Routen schleifenfrei bleiben.

Sinnvollerweise wird bei statischem Routing die Verwaltung der Adressen von der Verwaltung der statischen Routen getrennt, so dass nicht für jede Veränderung der Verkehrsverteilung neue Interface-Adressen konfiguriert oder entfernt werden müssen. Es empfiehlt sich z.B., eine gewisse Anzahl von Adressen pro Verbindung bzw. Link fest zu konfigurieren. Dabei können bei den hier angenommenen Punkt-zu-Punkt-Links jeweils IP-Netze minimaler Größe eingesetzt werden, bspw. mit Netz-Präfix /30. Somit werden pro Link 4 IP-Adressen verbraucht. Für eine ressourcenoptimierte Zuweisung von jeweils 4 Adressen auf die Interfaces gemäß Figur 1 würde man z.B. die folgenden 8 Netze auswählen:
10.2.0.0/30, 10.2.0.4/30, 10.2.0.8/30, 10.2.0.12/30 für L1 10.2.0.16/30, 10.2.0.20/30, 10.2.0.24/30, 10.2.0.28/30 für L2
Die Interface-Adressen wären dann z.B.:

| | |
|---|---|
| IF11: | 10.2.0.1, 10.2.0.5, 10.2.0.9, 10.2.0.13 |
| IF21: | 10.2.0.2, 10.2.0.6, 10.2.0.10, 10.2.0.14 |
| IF12: | 10.2.0.17, 10.2.0.21, 10.2.0.25, 10.2.0.29 |
| IF22: | 10.2.0.18, 10.2.0.22, 10.2.0.26, 10.2.0.30 |

Bei statischem Routing werden nur die entsprechenden next hops in die Routing-Tabelle ein- und ausgetragen, um die Lastverteilung zu ändern.

Neben dem statischem Routing kann, bei Einhaltung gewisser Randbedingungen, wie passende Einstellung der Routing-Metriken, auch ein Routing-Protokoll, wie OSPF, als Backup laufen, so dass auf jeden Fall noch ein Weg gefunden wird, auch wenn in der Routing-Tabelle zu einem Ziel kein funktionierender statischer next hop mehr vorhanden sein sollte.

Der parallele Betrieb eines herkömmlichen Routing-Protokolls im Hintergrund hat überdies den Vorteil, dass das Wieder-Erscheinen einer Verbindung automatisch erkannt wird. Ebenso kann eine schnelle Fehlererkennung eingesetzt werden.

Die Berechnung von Wegen bzw. Routen im Kommunikationsnetz kann lokal in den Netzknoten erfolgen. Die Verkehrsverteilung kann dagegen global koordiniert sein, z.B. durch eine zentrale Steuereinheit, wie ein Network Control Server NCS, oder durch Kommunikation der Netzknoten untereinander durch ein geeignetes Protokoll.

Ebenso kann ein Protokoll eingesetzt werden, durch das ein Netzknoten seinem Nachbar-Netzknoten mitteilt, dass er für ein Interface eine weitere virtuelle IP-Adresse konfigurieren soll. Dies kann dadurch erfolgen, dass auf die primäre IP-Adresse des Interfaces Bezug genommen wird und zusätzlich eine Adresse und eine IP-Netz-Nummer angegeben wird und diese zum Nachbar-Netzknoten durch ein Protokoll übermittelt wird, wie 10.2.0.18 und 10.2.0.16/30 im Falle des oben angegebenen Beispiels.

Figur 2 zeigt einen Ausschnitt eines Kommunikationsnetzes, bestehend aus fünf Netzknoten R1 bis R5 und zwei Subnetzen N2 und N3. Der Netzknoten R1 ist einerseits mit einem nicht dargestellten Kommunikationsnetz verbunden und weist andererseits zwei Interfaces IF11 und IF12 auf. Das Interface IF11 ist durch eine Verbindung L1 mit einem Interface IF21 des Netzknotens R2 verbunden, der wiederum zwei weitere Interfaces IF22 und IF23 aufweist. Das Interface IF22 ist durch eine Verbindung L3 mit einem Interface IF41 des Netzknoten R4 verbunden, der ebenfalls zwei weitere Interfaces IF42 und IF43 aufweist. Das Interface IF 43 ist durch eine Verbindung L7 mit dem Subnetz N2 verbunden.
Das Interface IF12 des Netzknotens R1 ist durch eine Verbindung L2 mit einem Interface IF31 des Netzknotens R3 verbunden, der auch zwei weitere Interfaces IF32 und IF33 aufweist. Das Interface IF33 ist durch eine Verbindung L6 mit einem Interface IF52 des Netzknotens R5 verbunden, der zwei weiteres Interfaces IF51 und IF53 aufweist. Das Interface IF53 ist durch eine Verbindung L8 mit dem Subnetz N3 verbunden. Weiterhin sind das Interface IF23 des Netzknoten R2 durch eine Verbindung L4 mit dem Interface IF51 des Netzknoten R5 verbunden und das Interface IF32 des Netzknoten R3 durch eine Verbindung L5 mit dem Interface IF42 des Netzknotens R4 verbunden.

Anhand von Figur 2 wird erklärt, wie das vorgeschlagene Verfahren für unterschiedliche Ziele, Ziel-Netzknoten bzw. Ziel-Subnetze eingesetzt wird. Der Netzknoten R1 soll Verkehr bzw. Datenpakete zum Subnetz N2 im Verhältnis 2:1 und Verkehr zum Subnetz N3 im Verhältnis 1:3 auf die Leitungen L1 und L2 aufteilen.

Die Interface Adresse der Netzknoten R1, R2 und R3 werden wie folgt gesetzt:

| | | |
|---|---|---|
| Netz 10.0.0.0/30 | IF11 (10.0.0.1, primär) | IF21 (10.0.0.2, primär) |
| Netz 10.0.0.4/30 | IF11 (10.0.0.5, sekundär) | IF21 (10.0.0.6, sekundär) |
| Netz 10.0.0.8/30 | IF12 (10.0.0.9, primär) | IF31 (10.0.0.10, primär) |
| Netz 10.0.0.12/30 | IF12 (10.0.0.13, sekundär) | IF31 (10.0.0.14, sekundär) |
| Netz 10.0.0.16/30 | IF12 (10.0.0.17, sekundär) | IF31 (10.0.0.18, sekundär) |

In der folgenden Routing Tabelle des Netzknoten R1 ist der Verkehr vom Netzknoten R1 zum Netz N2 im Verhältnis 2:1 und der Verkehr vom Netzknoten R1 zum Netz N3 im Verhältnis 1:3 auf die Leitungen L1 und L2 aufgeteilt:

| destination | next hop | interface |
|---|---|---|
| N2 | 10.0.0.2 | IF11 |
| | 10.0.0.6 | IF11 |
| | 10.0.0.10 | IF12 |
| N3 | 10.0.0.2 | IF11 |
| | 10.0.0.10 | IF12 |
| | 10.0.0.14 | IF12 |
| | 10.0.0.18 | IF12 |

Bei Verwendung statischer Routen müssen die virtuellen Adressen nicht in symmetrischer Weise ins Routing einbezogen sein, d.h. die Verkehrsverteilung kann in beiden Richtungen unterschiedlich sein. In größeren Netzen wird dies aufgrund der geforderten Schleifenfreiheit der Paketweiterleitung sogar die Regel sein.

Falls keine statischen Routen eingesetzt werden, könnten für die Router Adress-Pools konfiguriert werden, aus denen die neuen virtuellen IP-Adressen der Interfaces entnommen werden. Sobald auf beiden Seiten eines Links eine zusätzliche Adresse konfiguriert ist, kann sie durch das Routing-Protokoll, z.B. OSPF mit ECMP, selbsttätig in Betrieb genommen werden.

Die Vergabe mehrerer IP-Adressen für ein Interface kann bei klassischem OSPF mit ECMP eingesetzt werden, um in einem Netz mit Links unterschiedlicher Bandbreite eine adäquate Verkehrsverteilung zu erreichen. Hätte z.B. in Figur 1 die Ver bindung L1 eine Übertragungsbandbreite von 155Mbit/s und die Verbindung L2 eine Übertragungsbandbreite von 622Mbit/s, dann würde man, um den Verkehr entsprechend der Linkbandbreite aufzuteilen, für die Verbindung L2 vier Netzknotenadresse bzw. IP-Adressen und für die Verbindung L1 nur eine Netzknotenadresse bzw. IP-Adresse pro Seite konfigurieren.

## Patentansprüche

1. Netzknoten (K1, K2, R1, ..., R5) eines mehrere Netzknoten (K1, K2, R1, ..., R5) enthaltenden paketvermittelnden Kommunikationsnetzes, der mehrere zu anderen Netzknoten (K1, K2, R1, ..., R5) führende Verbindungswege (V1, V2, L1, ..., L8) hat, denen jeweils eine Netzknotenadresse zugeordnet ist,
**dadurch gekennzeichnet,**
**dass** mindestens einem Verbindungsweg (V1, V2, L1, ..., L8) des Netzknoten (K1, K2, R1, ..., R5) mehrere Netzknotenadressen zugeordnet sind und dass der Netzknoten (K1, K2, R1, ..., R5) derart ausgestaltet ist, dass der ankommende Datenpaketverkehr für einen Zielnetzknoten auf die Anzahl der konfigurierten zum Zielnetzknoten führenden Netzknotenadressen gleichmäßig aufgeteilt und über die Verbindungswege übertragen wird.

2. Netzknoten nach Anspruch 1,
**dadurch gekennzeichnet,**
**dass** jeweils ein Verbindungsweg (V1, V2, L1, ..., L8) an einem Netzknoten-Interface (IFK11, ..., IFK22, IF11, ..., IF 53) des Netzknotens (K1, K2, R1, ..., R5) angeschlossen ist und dem Netzknoten-Interface (IFK11, ..., IFK22, IF11, ..., IF 53) mehrere Netzknotenadressen zugeordnet sind.

3. Netzknoten nach Anspruch 2,
**dadurch gekennzeichnet,**
**dass** die einem Verbindungsweg (V1, V2, L1, ..., L8) oder einem Netzknoten-Interface (IFK11, ..., IFK22, IF11, ..., IF 53) zugeordneten Netzknotenadressen eines Netzknotens (K1, K2, R1, ..., R5) zu einem Nachbarnetzknoten übermittelbar sind.

4. Netzknoten nach Anspruch 2 oder 3,
**dadurch gekennzeichnet,**
**dass** die Anzahl der im Netzknoten (K1, K2, R1, ..., R5) pro Verbindungsweg (V1, V2, L1, ..., L8) bzw. pro Netzknoten-Interface (IFK11, ..., IFK22, IF11, ..., IF 53) eingerichteten Netzknotenadressen auch in gleicher Anzahl im am anderen Ende des Verbindungsweges (V1, V2, L1, ..., L8) angeschlossenen Netzknoten (K1, K2, R1, ..., R5) konfiguriert sind.

5. Netzknoten nach Anspruch 4,
**dadurch gekennzeichnet,**
**dass** die in beiden Netzknoten (K1, K2, R1, ..., R5) eines Verbindungsweges (V1, V2, L1, ..., L8) bzw. in beiden Netzknoten-Interfaces (IFK11, ..., IFK22, IF11, ..., IF 53) eines Verbindungsweges (V1, V2, L1, ..., L8) für den Verbindungsweg (V1, V2, L1, ..., L8) vorhandenen Netzknotenadressen derart konfiguriert sind, dass jede Netzknotenadresse eines Netzknoten (K1, K2, R1, ..., R5) mit einer Netzknotenadresse des gegenüberliegenden Netzknoten (K1, K2, R1, ..., R5) ein Paar bildet, bei dem beide Netzknotenadressen den gleichen Netzwerkanteil haben.

6. Netzknoten nach Anspruch 5,
**dadurch gekennzeichnet,**
**dass** jedem Netzknotenadressenpaar ein individueller Netzwerkanteil zugeordnet ist.

7. Netzknoten nach einem der vorhergehenden Ansprüche,
**dadurch gekennzeichnet,**
**dass** in jedem der Netzknoten (K1, K2, R1, ..., R5) eine Steuerungstabelle enthalten ist, in welcher die am Netzknoten (K1, K2, R1, ..., R5) angeschlossenen Verbindungswege (V1, V2, L1, ..., L8) und die pro Verbindungsweg (V1, V2, L1, ..., L8) eingetragenen Netzwerkadressen gespeichert sind.

8. Netzknoten nach einem der vorhergehenden Ansprüche,
**dadurch gekennzeichnet,**
**dass** wenigstens einer der Netzknoten (K1, K2, R1, ..., R5) des paketvermittelnden Kommunikationsnetzes derart ausgebildet ist, dass Pakete nach einem Mehrwege-Weiterleitungsverfahren vermittelbar sind.

9. Netzknoten nach einem der vorhergehenden Ansprüche,
**dadurch gekennzeichnet,**
**dass** die Netzknotenadressen Internet Protokoll Adressen sind.

10. Verfahren zur Verkehrsverteilung von zu einem Zielnetzknoten zu übertragenden Datenpaketen in einem Netzknoten (K1, K2, R1, ..., R5) eines paketvermittelten Kommunikationsnetzes, bei dem der Netzknoten (K1, K2, R1, ..., R5) mehrere zu anderen Netzknoten (K1, K2, R1, ..., R5) führende Verbindungswege (V1, V2, L1, ..., L8) hat, denen jeweils eine Netzknotenadresse zugeordnet ist,
**dadurch gekennzeichnet,**
**dass** mindestens einem Verbindungsweg (V1, V2, L1, ..., L8) des Netzknoten (K1, K2, R1, ..., R5) mehrere Netzknotenadressen zugeordnet werden, dass der im Netzknoten (K1, K2, R1, ..., R5) ankommende Datenpaketverkehr für einen Zielnetzknoten auf die Anzahl der zum Zielnetzknoten führenden Netzknotenadressen gleichmäßig aufgeteilt und über die Verbindungswege übertragen wird.

11. Verfahren nach Anspruch 10,
**dadurch gekennzeichnet,**
**dass** die einem Verbindungsweg (V1, V2, L1, ..., L8) zugeordneten Netzknotenadressen eines Netzknotens (K1, K2, R1, ..., R5) zu einem Nachbarnetzknoten (K1, K2, R1, ..., R5) übermittelt werden.

12. Verfahren nach Anspruch 10 oder 11,
**dadurch gekennzeichnet,**
**dass** die Anzahl der im Netzknoten (K1, K2, R1, ..., R5) pro Verbindungsweg (V1, V2, L1, ..., L8) eingerichteten Netzknotenadressen in gleicher Anzahl im am anderen Ende des Verbindungsweges (V1, V2, L1, ..., L8) angeschlossenen Netzknoten (K1, K2, R1, ..., R5) eingerichtet werden.

13. Verfahren nach Anspruch 12,
**dadurch gekennzeichnet,**
**dass** die in beiden Netzknoten (K1, K2, R1, ..., R5) eines Verbindungsweges (V1, V2, L1, ..., L8) vorhandenen Netzknotenadressen derart konfiguriert werden, dass jede Netzknotenadresse eines Netzknoten (K1, K2, R1, ..., R5) mit einer Netzknotenadresse des gegenüberliegenden Netzknoten (K1, K2, R1, ..., R5) ein Paar bildet, bei dem beide Netzknotenadressen den gleichen Netzwerkanteil haben.

14. Verfahren nach Anspruch 13,
**dadurch gekennzeichnet,**
**dass** jedem Netzknotenadressenpaar ein individueller Netzwerkanteil zugeordnet wird.

15. Verfahren nach einem der Ansprüche 10 bis 14,
**dadurch gekennzeichnet,**
**dass** als Netzwerkadressen Internet Protokoll Adressen verwendet werden.

16. Verfahren nach einem der Ansprüche 10 bis 15,
**dadurch gekennzeichnet,**
**dass** wenigstens einer der Netzknoten (K1, K2, R1, ..., R5) des paketvermittelnden Kommunikationsnetzes nach einem Mehrwege-Weiterleitungsverfahren betrieben wird.

## Claims

1. Network node (K1, K2, R1, ..., R5) of a packet switching communications network containing a plurality of network nodes (K1, K2, R1, ..., R5), which has a plurality of connection paths (V1, V2, L1, ..., L8) which lead to other network nodes (K1, K2, R1, ..., R5) and to which in each case a network node address is assigned,
**characterised in that**
a plurality of network node addresses are assigned to at least one connection path (V1, V2, L1, ..., L8) of the network node (K1, K2, R1, ..., R5) and that the network node (K1, K2, R1, ..., R5) is configured such that the incoming data packet traffic for a destination network node is divided equally between and transmitted via the connection paths to the number of configured network node addresses that lead to the destination network node.

2. Network node according to claim 1,
**characterised in that**
one connection path (V1, V2, L1, ..., L8) is connected in each case to a network node interface (IFK11, ..., IFK22, IF11, ..., IF53) of the network node (K1, K2, R1, ..., R5) and a plurality of network node addresses are assigned to the network node interface (IFK11, ..., IFK22, IF11, ..., IF53).

3. Network node according to claim 2,
**characterised in that**
the network node addresses of a network node (K1, K2, R1, ..., R5) which are assigned to a connection path (V1, V2, L1, ..., L8) or a network node interface (IFK11, ..., IFK22, IF11, ..., IF53) can be transmitted to an adjacent network node.

4. Network node according to claim 2 or 3,
**characterised in that**
the number of network node addresses set up in the network node (K1, K2, R1, ..., R5) per connection path (V1, V2, L1, ..., L8) or per network node interface (IFK11, ..., IFK22, IF11, ..., IF53) is also configured in the same number in the network node (K1, K2, R1, ..., R5) connected at the other end of the connection path (V1, V2, L1, ..., L8).

5. Network node according to claim 4,
**characterised in that**
the network node addresses present for the connection path (V1, V2, L1, ..., L8) in both network nodes (K1, K2, R1, ..., R5) of a connection path (V1, V2, L1, ..., L8) or in both network node interfaces (IFK11, ..., IFK22, IF11, ..., IF53) of a connection path (V1, V2, L1, ..., L8) are configured such that each network node address of a network node (K1, K2, R1, ..., R5) forms a pair with a network node address of the opposite network node (K1, K2, R1, ..., R5), whereby both network node addresses have the same network proportion.

6. Network node according to claim 5,
**characterised in that**
an individual network proportion is assigned to each network node address pair.

7. Network node according one of the preceding claims,
**characterised in that**
each of the network nodes (K1, K2, R1, ..., R5) contains a control table in which the connection paths (V1, V2, L1, ..., L8) connected to the network node (K1, K2, R1, ..., R5) and the network node addresses entered for each connection path (V1, V2, L1, ..., L8) are stored.

8. Network node according one of the preceding claims,
**characterised in that**
at least one of the network nodes (K1, K2, R1, ..., R5) of the packet switching communications network is designed such that packets can be switched according to a multi path routing method.

9. Network node according one of the preceding claims,
**characterised in that**
the network node addresses are Internet Protocol addresses.

10. Method for traffic distribution of data packets to be transmitted to a destination network node in a network node (K1, K2, R1, ..., R5) of a packet switching communications network, whereby the network node (K1, K2, R1, ..., R5) has a plurality of connection paths (V1, V2, L1, ..., L8) which lead to other network nodes (K1, K2, R1, ..., R5) and to which in each case a network node address is assigned,
**characterised in that**
a plurality of network node addresses are assigned to at least one connection path (V1, V2, L1, ..., L8) of the network node (K1, K2, R1, ..., R5) and that the data packet traffic arriving in the network node (K1, K2, R1, ..., R5) for a destination network node is divided equally between and transmitted via the connection paths to the number of network node addresses that lead to the destination network node.

11. Method according to Claim 10,
**characterised in that**
the network node addresses of a network node (K1, K2, R1, ..., R5) which are assigned to a connection path (V1, V2, L1, ..., L8) are conveyed to an adjacent network node (K1, K2, R1, ..., R5).

12. Method according to claim 10 or 11,
**characterised in that**
the number of network node addresses set up in the network node (K1, K2, R1, ..., R5) per connection path (V1, V2, L1, ..., L8) is the same as the number set up in the network node (K1, K2, R1, ..., R5) connected at the other end of the connection path (V1, V2, L1, ..., L8).

13. Method according to claim 12,
**characterised in that**
the network node addresses present in both network nodes (K1, K2, R1, ..., R5) of a connection path (V1, V2, L1, ..., L8) are configured such that each network node address of a network node (K1, K2, R1, ..., R5) forms a pair with a network node address of the opposite network node (K1, K2, R1, ..., R5), whereby both network node addresses have the same network proportion.

14. Method according to claim 13,
**characterised in that**
an individual network proportion is assigned to each network node address pair.

15. Method according to one of claims 10 to 14,
**characterised in that**
Internet Protocol addresses are used as network addresses.

16. Method according to one of claims 10 to 15,
**characterised in that**
at least one of the network nodes (K1, K2, R1, ..., R5) of the packet switching communications network is operated according to a multi path routing method.

## Revendications

1. Noeud de réseau (K1, K2, R1, ..., R5) d'un réseau de communication à commutation de paquets comprenant plusieurs noeuds de réseau (K1, K2, R1, ..., R5), lequel noeud de réseau a plusieurs chemins (V1, V2, L1, ..., L8) menant à d'autres noeuds de réseau (K1, K2, R1, ..., R5) et à chacun d'eux est attribuée une adresse de noeud de réseau,
**caractérisé en ce que**
plusieurs adresses de noeud de réseau sont attribuées à au moins un chemin (V1, V2, L1, ..., L8) du noeud de réseau (K1, K2, R1, ..., R5) et **en ce que** le noeud de réseau (K1, K2, R1, ..., R5) est configuré de telle sorte que le trafic d'arrivée de paquets de données pour un noeud de réseau cible est réparti uniformément sur le nombre d'adresses de noeud de réseau configurées menant au noeud de réseau cible et est transmis via les chemins.

2. Noeud de réseau selon la revendication 1,
**caractérisé en ce que**
à chaque fois un chemin (V1, V2, L1, ..., L8) est relié à une interface de noeud de réseau (IFK11, ..., IFK22, IF11, ..., IF 53) du noeud de réseau (K1, K2, R1, ..., R5) et plusieurs adresses de noeud de réseau sont attribuées à l'interface de noeud de réseau (IFK11, ..., IFK22, IF11, ..., IF 53).

3. Noeud de réseau selon la revendication 2,
**caractérisé en ce que**
les adresses de noeud de réseau d'un noeud de réseau (K1, K2, R1, ..., R5), attribuées à un chemin (V1, V2, L1, ..., L8) ou une interface de noeud de réseau (IFK11, ..., IFK22, IF11, ..., IF 53), peuvent être transmises à un noeud de réseau voisin.

4. Noeud de réseau selon la revendication 2 ou 3,
**caractérisé en ce que**
le nombre d'adresses de noeud de réseau configurées par chemin (V1, V2, L1, ..., L8) resp. par interface de noeud de réseau (IFK11, ..., IFK22, IF11, ..., IF 53) dans le noeud de réseau (K1, K2, R1, ..., R5) sont configurées en nombre identique aussi dans le noeud de réseau (K1, K2, R1, ..., R5) relié à l'autre bout du chemin (V1, V2, L1, ..., L8).

5. Noeud de réseau selon la revendication 4,
**caractérisé en ce que**
les adresses de noeud de réseau présentes dans les deux noeuds de réseau (K1, K2, R1, ..., R5) d'un chemin (V1, V2, L1, ..., L8) resp. dans les deux interfaces de noeud de réseau (IFK11, ..., IFK22, IF11, ..., IF 53) d'un chemin (V1, V2, L1, ..., L8) pour le chemin (V1, V2, L1, ..., L8) sont configurées de telle manière que chaque adresse de noeud de réseau d'un noeud de réseau (K1, K2, R1, ..., R5) forme avec une adresse de noeud de réseau du noeud de réseau d'en face (K1, K2, R1, ..., R5) une paire dans laquelle les deux adresses de noeud de réseau ont la même part dans le réseau.

6. Noeud de réseau selon la revendication 5,
**caractérisé en ce que**
une part individuelle du réseau est attribuée à chaque paire d'adresses de noeud de réseau.

7. Noeud de réseau selon l'une des revendications précédentes,
**caractérisé en ce que**
chaque noeud de réseau (K1, K2, R1, ..., R5) contient une table de commande dans laquelle sont enregistrés les chemins (V1, V2, L1, ..., L8) reliés au noeud de réseau (K1, K2, R1, ..., R5) et les adresses de réseau inscrites par chemin (V1, V2, L1, ..., L8).

8. Noeud de réseau selon l'une des revendications précédentes,
**caractérisé en ce que**
au moins un des noeuds de réseau (K1, K2, R1, ..., R5) du réseau de communication à commutation de paquets est conçu de telle manière que des paquets sont commutables selon un procédé de routage multichemin.

9. Noeud de réseau selon l'une des revendications précédentes,
**caractérisé en ce que**
les adresses de noeud de réseau sont des adresses du protocole Internet.

10. Procédé de distribution de trafic de paquets de données à transmettre vers un noeud de réseau cible dans un noeud de réseau (K1, K2, R1, ..., R5) d'un réseau de communication à commutation de paquets dans lequel le noeud de réseau (K1, K2, R1, ..., R5) a plusieurs chemins (V1, V2, L1, ..., L8) menant à d'autres noeuds de réseau (K1, K2, R1, ..., R5) et à chacun d'eux est attribuée une adresse de noeud de réseau,
**caractérisé en ce que**
au moins un chemin (V1, V2, L1, ..., L8) du noeud de réseau (K1, K2, R1, ..., R5) se voit attribuer plusieurs adresses de noeud de réseau, **en ce que** le trafic de paquets de données arrivant dans le noeud de réseau (K1, K2, R1, ..., R5) et destiné à un noeud de réseau cible sera réparti uniformément sur le nombre d'adresses de noeud de réseau menant au noeud de réseau cible et sera transmis via les chemins.

11. Procédé selon la revendication 10,
**caractérisé en ce que**
les adresses de noeud de réseau d'un noeud de réseau (K1, K2, R1, ..., R5) attribuées à un chemin (V1, V2, L1, ..., L8) seront transmises à un noeud de réseau voisin (K1, K2, R1, ..., R5).

12. Procédé selon la revendication 10 ou 11,
**caractérisé en ce que**
le nombre d'adresses de noeud de réseau configurées par chemin (V1, V2, L1, ..., L8) dans le noeud de réseau (K1, K2, R1, ..., R5) seront configurées en nombre identique dans le noeud de réseau (K1, K2, R1, ..., R5) relié à l'autre bout du chemin (V1, V2, L1, ..., L8).

13. Procédé selon la revendication 12,
**caractérisé en ce que**
les adresses de noeud de réseau présentes dans les deux noeuds de réseau (K1, K2, R1, ..., R5) d'un chemin (V1, V2, L1, ..., L8) seront configurées de telle manière que chaque adresse de noeud de réseau d'un noeud de réseau (K1, K2, R1, ..., R5) forme avec une adresse de noeud de réseau du noeud de réseau d'en face (K1, K2, R1, ..., R5) une paire dans laquelle les deux adresses de noeud de réseau ont la même part dans le réseau.

14. Procédé selon la revendication 13,
**caractérisé en ce que**
chaque paire d'adresses de noeud de réseau se voit attribuer une part individuelle du réseau.

15. Procédé selon l'une des revendications 10 à 14,
**caractérisé en ce que**
des adresses du protocole Internet seront utilisées comme adresses de noeud de réseau.

16. Procédé selon l'une des revendications 10 à 15,
**caractérisé en ce que**
au moins un des noeuds de réseau (K1, K2, R1, ..., R5) du réseau de communication à commutation de paquets sera exploité selon un procédé de routage multichemin.
